# EUROPÄISCHE PATENTANMELDUNG

(11) **EP 0 815 961 A2**
(43) Veröffentlichungstag der Anmeldung: **07.01.1998**
(21) Anmeldenummer: 97108073.4
(22) Anmeldetag: 17.05.1997
(51) Int. Cl.: B08B 3/14

(54) **Verfahren zur Aufbereitung von Prozesswasser aus einer Flaschenreinigungsmaschine**

(30) Priorität: 24.06.1996 DE 19625184
(71) Anmelder: WABAG Wassertechnische Anlagen GmbH, 95326 Kulmbach (DE)
(72) Erfinder: Hagen, Klaus, Dr., 95326 Kulmbach (DE); Mende, Ulrich, 95326 Kulmbach (DE)
(74) Vertreter: Müller, Jürgen, Dipl.-Ing.

(57) **Zusammenfassung**

Aus einer Flaschenreinigungsmaschine, in der die zu reinigenden Flaschen nacheinander eine Vorweiche, ein Laugenweichbad und mehrere Spritz- und Spülzonen durchlaufen, wird der Gesamtstrom oder ein Teilstrom des Prozeßwassers nach der bezogen auf die Durchlaufrichtung der Flaschen ersten Spritzzone entnommen. Der entnommene Strom wird unmittelbar nach seiner Entnahme aus der Spritzzone und einer Reinigung in einem Filter einer Umkehrosmose zugeführt und dort in entsalztes Reinwasser und aufgesalztes Restwasser zerlegt. Das Restwasser wird aus der Umkehrosmose in die Vorweiche zurückgeführt. Das Reinwasser wird einer der Spritz- und Spülzonen ggf. nach einer Zwischenspeicherung zurückgeführt. Dabei wird in Abhängigkeit von dieser zurückgeführten Reinwassermenge der Flaschenreinigungsmaschine Frischwasser zugeführt.

## Beschreibung

Die Erfindung betrifft ein Verfahren zur Aufbereitung und Verwertung von Prozeßwasser aus einer Flaschenreinigungsmaschine mit den Merkmalen des Oberbegriffes des Anspruches 1.

Bei einem aus der DE-PS 26 22 434 bekannten Verfahren zur Reinigung von Flaschen wird der Gesamtstrom oder ein Teilstrom des Spritzwassers aus der Spritzzone in die Vorweiche abgeführt. Ein weiterer Teilstrom des Spritzwassers wird in einen Verdampfer geleitet, in dem dieser Teilstrom in Reinwasser und Restwasser getrennt wird. Das Reinwasser wird in die Spritzzone zurückgeführt, während das Restwasser dem Laugenweichbad zugeführt wird. Gemäß der DE-PS 26 60 837 wird der Vorweiche ein Teilstrom entnommen und über eine Ultrafiltrationstufe einer Umkehrosmose zugeführt. Die Aufbereitung des Prozeßwassers mit einer derart hohen Belastung stellt eine hohe Belastung der Umkehrosmose dar, die mit einem erhöhten Energieaufwand verbunden ist.

Weiterhin ist es zur Verringerung des Frischwasserverbrauches in Flaschenreinigungsmaschinen aus der DE-PS 42 29 269 bekannt, Spritzwasser aus der Spritzwasserzone abzuziehen, auf die erforderliche Wasserqualität, z. B. durch eine Mikrofiltration oder eine Feinstfiltration durch Umkehrosmose aufzuarbeiten und einer vorhergehenden Spritzzone zuzuführen. In dieser Druckschrift ist nichts über die Regelung der Frischwasserzufuhr und die Verwendung des bei der Aufbereitung anfallenden Restwassers ausgesagt.

Der Erfindung liegt die Aufgabe zugrunde, das gattungsgemäße Verfahren derart zu gestalten, daß Frischwasser gezielt eingespart und die Abwassermenge reduziert werden kann.

Diese Aufgabe wird bei einem gattungsgemäßen Verfahren erfindungsgemäß durch die kennzeichnenden Merkmale des Anspruches 1 gelöst. Vorteilhafte Ausgestaltungen der Erfindung sind Gegenstand der Unteransprüche.

Bei dem erfindungsgemäßen Verfahren ist die Menge an Frischwasser auf die Menge an rückgeführtem aufbereitetem Wasser abgestimmt, so daß die Frischwassermenge gezielt reduziert werden kann. Das bei der Umkehrosmose anfallende Restwasser hat noch eine solche Qualität, daß es der Vorweiche zugeführt werden und dort Vorreinigungsaufgaben wahrnehmen kann. Das aus der Vorweiche ablaufende Abwasser ist im Vergleich zum bisherigen Verfahrensablauf wesentlich höher konzentriert, da die Vorweiche eine geringere Austauschrate erfährt. Die CSB-Konzentration des Prozeßwassers in der Vorweiche erreicht einen solchen Wert, daß eine anaerobe Reinigungsstufe für das abgezogene Prozeßwasser eingesetzt werden kann.

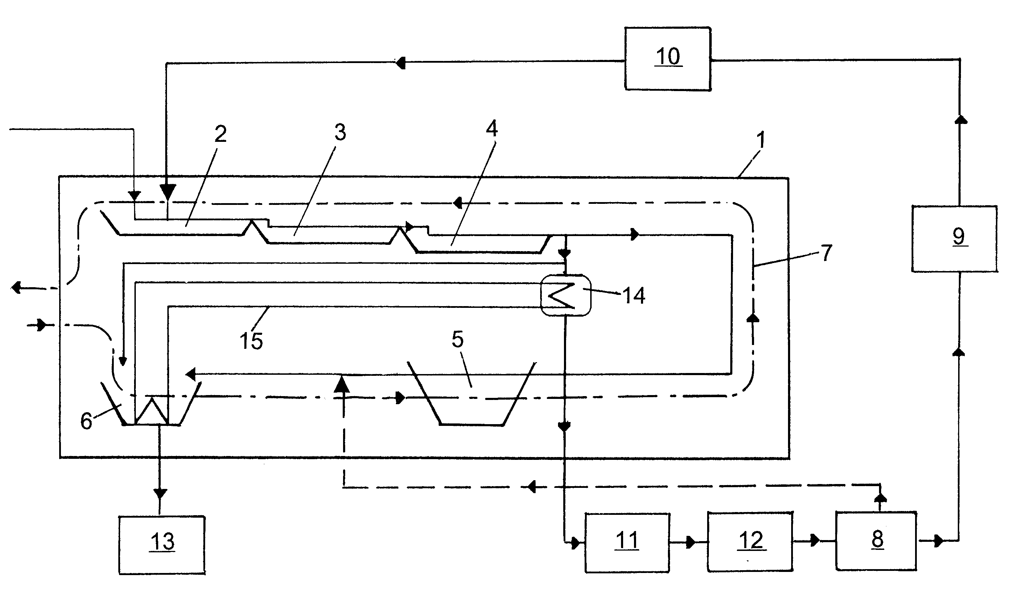

Ein Ausführungsbeispiel der Erfindung ist in der Zeichnung dargestellt und wird im folgenden näher erläutert. Die Zeichnung stellt ein Fließschema einer Flaschenreinigungsmaschine dar.

Die Flaschenreinigungsmaschine 1 umfaßt mehrere verschieden temperierte Spritz- oder Spülzonen 2, 3, 4, ein Laugenbad 5 und eine Vorweiche 6. Durch diese Stationen werden die zu reinigenden Flaschen im Gegenstrom zu dem Strömungsweg des Prozeßwassers gefördert. Die Förderrichtung der Flaschen ist durch den Linienzug 7 gekennzeichnet. In der bezogen auf die Förderrichtung der Flaschen letzten Spritzzone 2 werden die Flaschen mit Frischwasser behandelt, um die letzten Reste der Waschflüssigkeit aus den Flaschen zu entfernen. Das dort eingesetzte Frischwasser muß der Lebensmittelverordnung entsprechen, da die Flaschen unmittelbar nach dieser letzten Spritzung mit Lebensmittel in Berührung kommen. Dieses Wasser fließt den Flaschen kaskadenartig entgegen, um die aus der alkalischen Reinigung in dem Laugenbad 5 ausgetragene Lauge und Tenside zu entfernen und die Flaschen zu kühlen. Nach der ersten Spritzzone 4, der sogenannten Warmwasser-Spritzung hat das Prozeßwasser eine Temperatur von etwa 50 °C und einen pH-Wert von etwa 12. Dieses Wasser wird dem Laugenbad 5 und anschließend der Vorweiche 6 zugeführt. In der Vorweiche 6 wärmt das Prozeßwasser die zu reinigenden Flaschen auf, weicht die in den Flaschen enthaltenen Schmutzstoffe ein und entfernt sie zum Teil. Das verbrauchte Prozeßwasser wird aus dem Prozeß entfernt.

Ein Teilstrom des Prozeßwassers wird hinter der ersten Spritzzone 4 entnommen und nach einer Voraufbereitung einer Umkehrosmose 8 zugeführt. In der Umkehrosmose 8 wird der entnommene Teilstrom aufbereitet und in entsalztes Reinwasser und aufgesalztes Restwasser getrennt. Dabei werden durch die Membranen der Umkehrosmose 8 etwa 80 % Reinwasser erzeugt. Bedingt durch die hohe Temperatur des Prozeßwassers kann die Umkehrosmose bei einem Druck von > 10 bar erfolgen. Das Reinwasser wird je nach Anwendungsfall gekühlt und in einer Neutralisation 9 z. B. mit Kohlenstoffdioxid neutralisiert. Anschließend wird das Reinwasser in einer Konditionierung 10 mit Keimvernichtungsmitteln behandelt. Das so behandelte Reinwasser wird gegebenenfalls zwischengespeichert und für die Flaschenspritzung bereitgehalten.

Das Reinwasser kann etwa 80 % der normalen Frischwasserbedarfes ersetzen und wird bevorzugt als vorletzter Spülgang in der letzten Spritzzone 2 genutzt, um der Lebensmittelverordnung zu genügen. Die letzte Spritzung erfolgt dann in jedem Fall mit Frischwasser. Die zugeführte Menge an Frischwasser erfolgt in Abhängigkeit von der Menge an rückgeführtem Reinwasser. Auf diese Weise wird sichergestellt, daß so wenig wie möglich Frischwasser verbraucht wird.

Obwohl der entnommene Teilstrom des Prozeßwassers kaum Schwebstoffe enthält, ist aus Sicherheitsgründen der Umkehrosmose 8 ein Sicherheitsfilter 12, z. B. ein Kerzenfilter vorgeschaltet. Je nach dem verwendeten Membrantyp ist eine Vorneutralisation 11 vorgesehen, in der das Prozeßwasser vor dem Eintritt in die Umkehrosmose 8 auf einen pH-Wert zwischen 7 und 12 eingestellt wird.

Das bei der Umkehrosmose 8 anfallende Restwasser wird der Vorweiche 6 zugeführt. Wird nur ein Teilstrom des Prozeßwassers der Umkehrosmose 8 unterworfen, so ist das anfallende Restwasser und der andere Teilstrom der Vorweichen 6 zuzuführen. Da das in der Umkehrosmose 8 anfallende Restwasser eine verhältnismäßige hohe Schmutzbelastung aufweist, ist auch das aus der Vorweiche 6 abgezogene Prozeßwasser hoch belastet. Aufgrund dieser CSB-Belastung lohnt es sich, das Prozeßwasser einer biologischen Reinigungsanlage 13 zuzuführen, in der der CSB unter anoeroben Bedingungen abgebaut wird.

Der der ersten Spritzzone entnommene Teilstrom des Prozeßwassers wird zur Wärmeabgabe durch einen Wärmetauscher 14 geführt. Die von dem Wärmetauscher aufgenommene Wärme wird über ein Wärmeaustauschsystem 15 dem Prozeßwasser in der Vorweiche 6 zugeführt.

## Patentansprüche

1. Verfahren zur Aufbereitung und Verwertung von Prozeßwasser aus einer Flaschenreinigungsmaschine, in der die zu reinigenden Flaschen nacheinander eine Vorweiche, ein Laugenweichbad und mehrere Spritz- und Spülzonen durchlaufen, wobei der Gesamtstrom oder ein Teilstrom des Prozeßwassers nach der bezogen auf die Durchlaufrichtung der Flaschen ersten Spritzzone entnommen, der entnommene Strom in einer Umkehrosmose in entsalztes Reinwasser und aufgesalztes Restwasser zerlegt, das Reinwasser einer der Spritz- und Spülzonen ggf. nach einer Zwischenspeicherung und das Restwasser der Flaschenreinigungsmaschine zurückgeführt wird, dadurch gekennzeichnet, daß der Strom des Prozeßwassers unmittelbar nach seiner Entnahme aus der Spritzzone und einer Reinigung in einem Filter der Umkehrosmose zugeführt wird, daß das Restwasser aus der Umkehrosmose in die Vorweiche zurückgeführt wird und daß in Abhängigkeit von der zurückgeführten Reinwassermenge der Flaschenreinigungsmaschine Frischwasser zugeführt wird.

2. Verfahren nach Anspruch 1, dadurch gekennzeichnet, daß das Reinwasser der vorletzten Spritzzone zugeführt wird.

3. Verfahren nach Anspruch 1 oder 2, dadurch gekennzeichnet, daß der gereinigte Strom des Prozeßwassers vor der Umkehrosmose neutralisiert wird.

4. Verfahren nach Anspruch 1 oder 2, dadurch gekennzeichnet, daß der gereinigte Strom des Prozeßwassers vor der Umkehrosmose auf einen pH-Wert zwischen 7 und 12 eingestellt wird.

5. Verfahren nach einem der Ansprüche 1 bis 3, dadurch gekennzeichnet, daß der Strom des Prozeßwassers nach der Entnahme gekühlt und daß die dabei entzogene Wärme dem Prozeßwasser in der Vorweiche zugeführt wird.

6. Verfahren nach einem der Ansprüche 1 bis 3, dadurch gekennzeichnet, daß aus der Vorweiche der Gesamt- oder Teilstrom des Prozeßwassers entnommen und in einer biologischen Reinigungsanlage unter anaeroben Bedingungen behandelt wird.
